# EUROPEAN PATENT APPLICATION

(11) **EP 1 564 927 A1**
(43) Date of publication of application: **17.08.2005**
(21) Application number: 03770125.7
(22) Date of filing: 04.11.2003
(51) Int. Cl.: H04L 9/24, G06F 7/58

(54) **RANDOM NUMBER GENERATION DEVICE**

(30) Priority: 01.11.2002 JP 2002320035
(71) Applicant: Sanyo Electric Co., Ltd., Moriguchi City, Osaka 570-8677 (JP); Kabushiki Kaisha Suri Sekkei Kenkyusho, Maebashi-shi, Gumma 371-0816 (JP)
(72) Inventor: ONAYA, Masato,c/o SANYO ELECTRIC CO., LTD., Moriguchi City, Osaka 570-8677 (JP); TAMAKI, H., KABUSHIKI KAISHA SURI SEKKEI KENKYUSHO, Maebashi-shi, Gunma 371-0816 (JP); IKETANI, Akira,c/o SANYO SEMICON DEVICE CO., LTD., Taito-ku, Tokyo 110-0005 (JP)
(74) Representative: Cross, Rupert Edward Blount
(86) International application number: PCT/JP2003/014055
(87) International publication number: WO 2004/040838

(57) **Abstract**

A random number generation device comprises a pseudo random number generation section that is capable of outputting random numbers of a plurality of different pseudo random number sequences, a physical random number generation section for generating physical random numbers, and a switching section for switching the pseudo random number sequence of random numbers output by the pseudo random number generation section on the basis of the physical random numbers generated by the physical random number generation section, where the output of the pseudo random number generation section is used as output random numbers. Since the plurality of different pseudo random number sequences are switched and output according to the physical random numbers, predictability of the random numbers can be reduced in comparison to a conventional random number generation device that uses only pseudo random numbers. Furthermore, since the physical random numbers are not directly used as the output random numbers, any adverse effect on the predictability of the output random numbers is substantially reduced compared with a conventional device even if the physical random number generating means are somehow manipulated from the outside.

## Description

### Technical Field

The present invention relates to a random number generation device, and more particularly to a preferable random number generation device for encryption algorithms.

### Background Art

Random numbers are often used in encryption algorithms to ensure security. For the random numbers in these instances, pseudo random numbers are generally used, such as those represented by M sequences (Maximum length code). The M sequence codes can be generated by publicly known linear shift-register code generators.

Furthermore, besides the above-mentioned pseudo random numbers, also known are physical random numbers, which are generated by utilizing randomly occurring events, such as nuclear disintegration, or natural phenomenon, such as electrical noise. Physical random numbers may be utilized in encryption algorithms instead of the above-mentioned pseudo random numbers (for example, Japanese Patent Laid-Open Publication No. 2000-66592).

However, pseudo random numbers, such as those represented by M sequences, cannot necessarily be considered to be random numbers having a high degree of safety and thus may not be preferable in terms of ensuring security. This is because the random numbers may become predictable since pseudo random numbers are generated from a certain arithmetic process or a combination of functions and the same values are obtained if the same initial condition is provided.

Furthermore, since physical random numbers are generally based on weak signals, these signals are usually amplified by an amplifier to a usable level, such as for use in encryption algorithms. However, there are instances where the overall apparatus is influenced by electric fields or magnetic fields so that the intentional or unintentional application of such fields may cause the probability of random number generation to be manipulated, thereby lowering the degree of safety.

### Disclosure of Invention

A random number generation device relating to the present invention comprises pseudo random number generating means capable of outputting random number patterns of a plurality of different pseudo random number sequences, physical random number generating means for generating physical random numbers, and switching means for switching pseudo random number sequences of random numbers to be output by the pseudo random number generating means on the basis of the physical random number generated by the physical random number generating means. Namely, according to the random number generation device relating to the present invention, since the plurality of different pseudo random numbers are switched and output according to the physical random number, predictability of the random numbers can be reduced in comparison to a conventional random number generation device that uses only pseudo random numbers. Furthermore, since the physical random numbers are not directly used as the output random numbers, any adverse effect on the predictability of the output random numbers is substantially reduced compared with a conventional device even if the physical random number generating means are somehow manipulated from the outside.

The random number generation device relating to the present invention can be implemented in various embodiments. For example, the random number generation device relating to the present invention can be configured so that the pseudo random number generating means include a linear shift-register code generator, and so that the switching means switch between inverted and non-inverted feedback input values to the linear shift-register code generator on the basis of a physical random number generated by the physical random number generating means.

Furthermore, the random number generation device relating to the present invention can be configured so that the pseudo random number generating means include a linear shift-register code generator, and so that the switching means switch between inverted and non-inverted output values from the linear shift-register code generator on the basis of a physical random number generated by the physical random number generating means.

Furthermore, the random number generation device relating to the present invention can be configured so that the pseudo random number generating means include a linear shift-register code generator and generate a plurality of feedback input values on the basis of different combinations of taps of the linear shift-register code generator, and so that the switching means switch the feedback input value as feedback input to the linear shift-register code generator from among the generated plurality of feedback input values on the basis of a physical random number generated by the physical random number generating means.

Furthermore, the random number generation device relating to the present invention can be configured so that the pseudo random number generating means include a linear shift-register code generator for generating a first feedback input value based on a predetermined tap combination and a flip-flop for receiving the first feedback input value, performing bit shifting for a predetermined number of bits in synchronization with the linear shift-register code generator, and using the resulting output as a second feedback input value, and so that the switching means switch the feedback input value as feedback input to the linear shift-register code generator from either the first or second feedback input values on the basis of a physical random number generated by the physical random number generating means.

Furthermore, the random number generation device relating to the present invention comprises a detecting means for detecting a code sequence of the linear shift-register code generator, where, if random numbers of a valid, or switched so as to be valid, pseudo random number sequence cannot be generated due to the code sequence that was detected, it is preferable for the switching means to switch to a pseudo random number sequence other than the above-mentioned pseudo random number sequence. This prevents the code sequence of the linear shift-register code generator from becoming a code sequence where pseudo random numbers are not generated for a valid pseudo random number sequence.

Furthermore, the random number generation device relating to the present invention comprises a detecting means for detecting a code sequence of the linear shift-register code generator, and it is preferable to invert at least one of the bit values of the code sequence if random numbers of a valid, or switched so as to be valid, pseudo random number sequence cannot be generated due to the code sequence that was detected. This configuration also prevents the code sequence of the linear shift-register code generator from becoming a code sequence where pseudo random numbers are not generated for a valid pseudo random number sequence.

### Brief Description of Drawings

Fig. 1 is a block diagram of a random number generation device relating to a first embodiment of the present invention.
Fig. 2 shows an example of pseudo random number sequences generated by the random number generation device relating to the first embodiment of the present invention.
Fig. 3 is a block diagram of a physical random number generation section relating to embodiments of the present invention.
Fig. 4 is a block diagram of a random number generation device relating to a second embodiment of the present invention.
Fig. 5 is a block diagram of a random number generation device relating to a third embodiment of the present invention.
Fig. 6 shows an example of pseudo random number sequences generated by the random number generation device relating to the third embodiment of the present invention.
Fig. 7 is a block diagram of a random number generation device relating to a fourth embodiment of the present invention.
Fig. 8 shows an example of pseudo random number sequences generated by the random number generation device relating to the fourth embodiment of the present invention.
Fig. 9 is a block diagram of a random number generation device relating to a fifth embodiment of the present invention.
Fig. 10 shows an example of pseudo random number sequences generated by the random number generation device relating to the fifth embodiment of the present invention.
Fig. 11 is a block diagram of a random number generation device relating to a sixth embodiment of the present invention.

### Detailed Description of the Preferred Embodiments

### First Embodiment

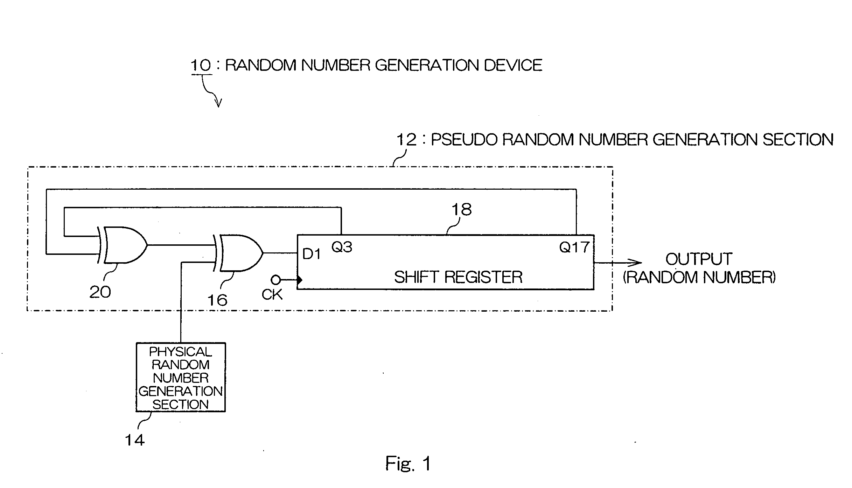

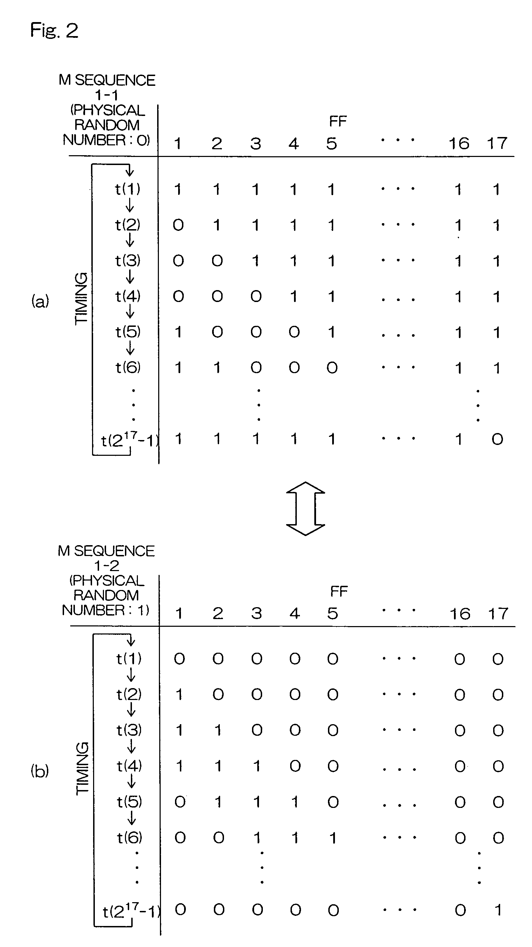

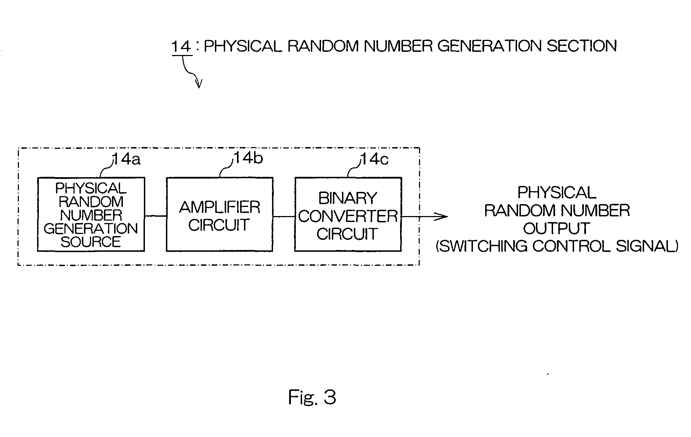

Fig. 1 is a block diagram of a random number generation device 10 relating to this embodiment, Fig. 2 shows cyclic patterns of two M sequences generated by the random number generation device 10, and Fig. 3 is a block diagram of a physical random number generation section 14.

The random number generation device 10 comprises a pseudo random number generation section 12, the physical random number generation section 14, and a switching section 16. The pseudo random number generation section 12, comprising at least one linear shift-register code generator, can output random number patterns of a plurality of different pseudo random number sequences (for example, M sequences). In this embodiment are provided a shift register 18 that includes a plurality of flip-flops connected in a cascaded arrangement, and an EXOR gate 20 that outputs the exclusive OR of output values from a predetermined plurality of tap positions, so as to form a linear shift-register code generator for outputting M sequence random numbers. In the example of Fig. 1, the shift register 18 comprises 17 flip-flops configured as a 17-stage shift-register for shifting bits in response to a clock (CK), and on the basis of the tap outputs (Q outputs: Q3, Q17) from the 3^{rd} and 17^{th} flip-flops as counted from the input end, the feedback input value is generated (D1 input of shift register 18: "1" (high level) or "0" (low level)).

In a general linear shift-register code generator, the output of the EXOR gate 20 is directly fed back as an input to the shift register 18. However, in this embodiment, the output of the EXOR gate 20 is input by the shift register 18 via the switching section 16. On the basis of a physical random number output (binary code) from the physical random number generation section 14, the switching section 16 switches between inverted and non-inverted output values from the EXOR 20 to become the feedback input value. Namely, the physical random output can be considered to be a switching control signal. In the example of Fig. 1, the switching section 16 is formed by the EXOR gate. The EXOR gate outputs a "1" when the input values are different and a "0" when they are identical. Therefore, when the physical random number output value is "1", the output value of the EXOR gate 20 is inverted by the switching section 16, and when the physical random number output value is "0", the output value of the EXOR gate 20 is not inverted. Thus, in response to the physical random number output value, the switching section 16 performs switching so that the output value of the EXOR gate 20 is inverted then fed back as the input value or directly fed back as the input value without being inverted.

The operation of the switching section 16 enables the pseudo random number generation section 12 to generate two different pseudo random number sequences. In the example of Fig. 1, since the feedback input value is not inverted at the switching section 16 when the physical random number output value is "0", an M sequence 1-1 (Fig. 2a) that cyclically varies in 2¹⁷-1 cycles on the basis of the clock signal (CK) is generated by the pseudo random number generation section 12. On the other hand, since the feedback input value is inverted at the switching section 16 when the physical random number output value is "1", an M sequence 1-2 (Fig. 2b) that cyclically varies in 2¹⁷-1 cycles on the basis of the same clock signal is generated. It should be noted that the M sequence 1-1 and the M sequence 1-2 have the same changing pattern. However, since the codes are inverted from each other, that they can be treated as different pseudo random number sequences. As a result, since the switching signal that is supplied to the switching section 16 is controlled by physical random numbers, the use of intermediate information in the shift register generating one pseudo random number sequence to switch to another pseudo random number sequence yields a pseudo random number sequence that is impossible to predict. Furthermore, the frequency of the 0s and 1s in the two pseudo random number sequences has a symmetrical ratio of 2¹⁶-1 to 2¹⁶ and 2¹⁶ to 2¹⁶-1, respectively. Thus, controlling the switching of the two pseudo random number sequences on the basis of physical random numbers also has an effect of approximating an ideal frequency distribution of the 0s and 1s.

As shown in Fig. 3, the physical random number generation section 14 comprises a physical random number generation source 14a, an amplifier circuit 14b, and a binary converter circuit 14c. The physical random number generation source 14a generates signals that randomly change on the basis of natural phenomenon. For example, as disclosed in the above-mentioned patent document 1, a semiconductor device that generates noise signals, which are created in current paths including the junction, can also be included. Besides this, it should be noted that the decay of radioactive materials or other phenomenon may also be utilized as the physical random number generation source 14a. The signal generated at the physical random number generation source 14a is amplified at the amplifier circuit 14b, and undergoes binary conversion at the binary converter circuit 14c. The binary converter circuit 14c compares the amplitude of the amplified signal with a predetermined threshold value at a predetermined sampling timing. For example, when the amplitude of the amplified signal is higher than the predetermined threshold value, a "1" is output, and when it is lower, a "0" is output. In this manner, a physical random number output value having a predetermined voltage representing "1" or "0" is output from the physical random number generation section 14. It should be noted that although the threshold level in the binary converter circuit 14c can be arbitrarily set, it is normally set so that the probability of generation of 1s and 0s is substantially 1:1. It should also be noted that the output signal may also be generated simply by comparing the amplitude of the amplified signal with the predetermined threshold value at the binary converter circuit 14c.

In this manner, the random number generation device 10 relating to this embodiment not only switches the output between two different pseudo random number sequences according to physical random numbers but also changes the feedback state for the two pseudo random number sequences by effectively utilizing intermediate information in the shift register. This makes it more difficult to predict the random numbers compared to the case where pseudo random numbers only are used. Furthermore, since the physical random numbers are not directly used as the output random numbers, any adverse effect on the predictability of the output random numbers is substantially reduced compared with a conventional device even if the physical random number generating means are somehow manipulated from the outside.

### Embodiment 2

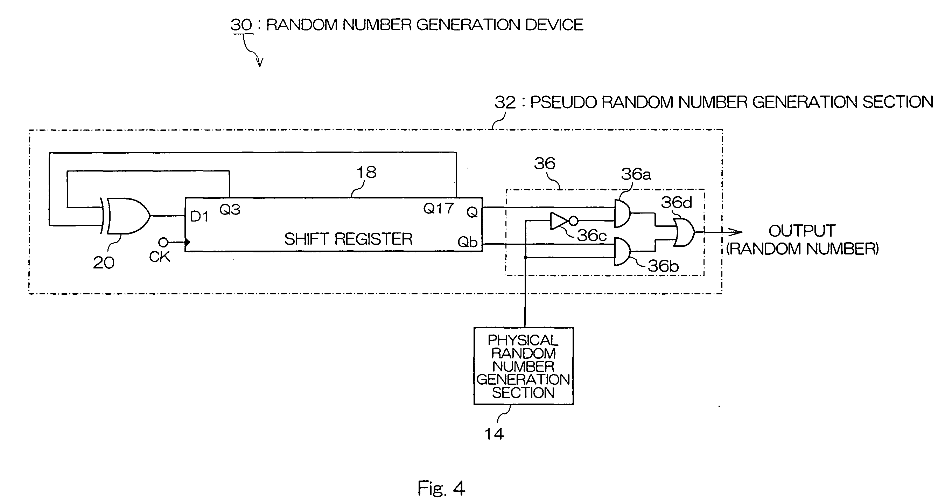

Fig. 4 is a block diagram of a random number generation device 30 relating to this embodiment. The random number generation device 30 comprises a pseudo random number generation section 32, the physical random number generation section 14, and a switching section 36. The components that are identical to those in the above-mentioned embodiment are given the same reference numerals and their redundant descriptions are omitted here.

In the pseudo random number generation section 32 relating to this embodiment, the output value from the linear shift-register code generator is inverted or not inverted as an output random number by the switching section 36. In the example of Fig. 4, a typical linear shift-register code generator is configured to include the shift register 18 and the EXOR gate 20. Outputs Q, a predetermined bit of the shift register 18 (for example, the 17^{th} bit), and Qb (inverted output of Q) are respectively input by the switching section 36.

The switching section 36 comprises two AND gates 36a, 36b, of which one AND gate 36a inputs the Q output and the physical random number output from the physical random number generation section 14 via an inverter 36c, and the other AND gate 36b inputs the Qb output and the physical random number output from the physical random number generation section 14. The outputs of these two AND gates 36a, 36b are then input by an OR gate 36d and the output of the OR gate 36d becomes the output random number.

The switching section 36, according to the physical random number, sets as valid one of either the Q output or the Qb output. Namely, when the physical random number output value is "1", the output value of the AND gate 36a is always "0" and the output value of the AND gate 36b becomes the same as the Qb output value so that the random number output value is the same as the Qb output value. Conversely, when the physical random number output value is "0", the output value of the AND gate 36b is always "0" and the output value of the AND gate 36a becomes the same as the Q output value so that the random number output value is the same as the Q output value. Namely, due to the action of the switching section 36, the inverted Q output value becomes the output random number when the physical random number output value is "1" and the Q output value directly becomes the output random number when the physical random number output value is "0". Therefore, similar to the above-mentioned embodiment 1, the random number generation device 30 relating to this embodiment can also switch and output the two random number sequences (M sequences 1-1, 1-2) shown in Fig. 2 according to the physical random number. Namely, an effect similar to that in embodiment 1 is also achieved by this configuration.

### Embodiment 3

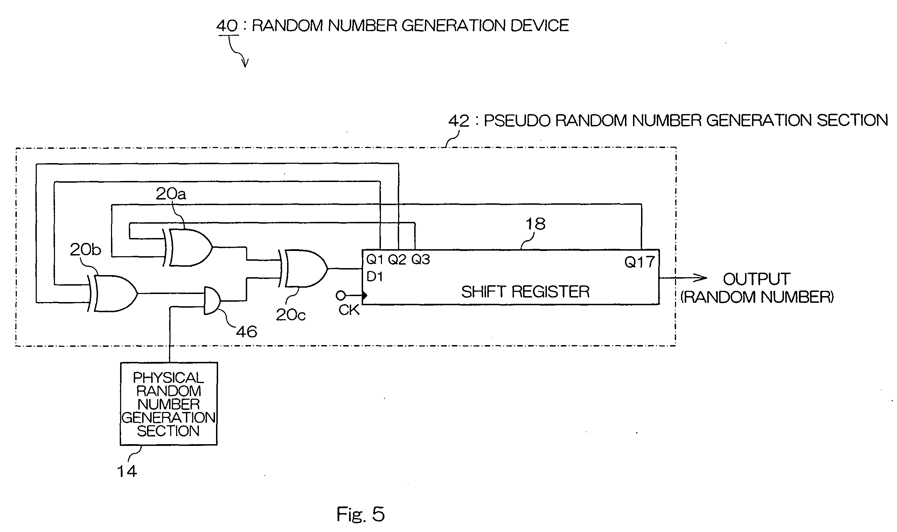

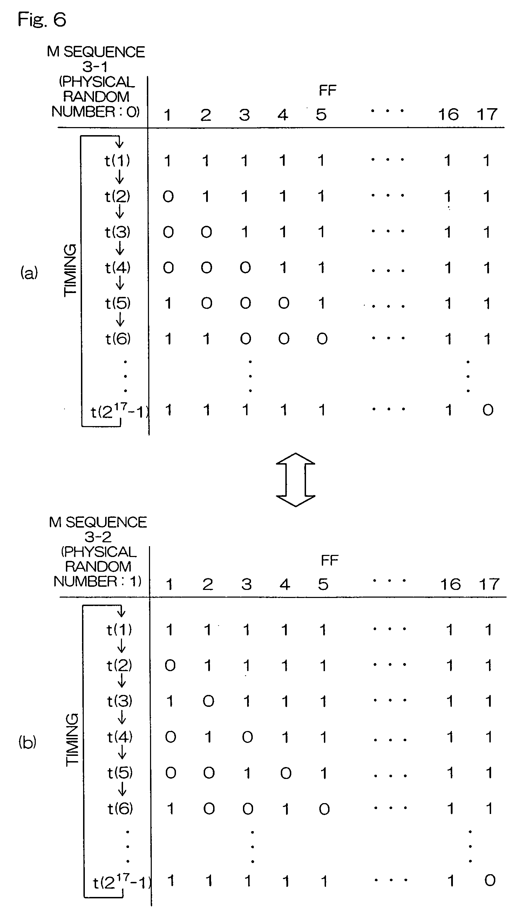

Fig. 5 is a block diagram of a random number generation device 40 relating to this embodiment and Fig. 6 shows cyclic patterns of two M sequences generated by the random number generation device 40. The random number generation device 40 comprises a pseudo random number generation section 42, the physical random number generation section 14, and a switching section 46. It should be noted here also that the components that are identical to those in the above-mentioned embodiments are given the same reference numerals and their redundant descriptions are omitted.

The pseudo random number generation section 42 relating to this embodiment can generate two types of feedback input values based on different combinations of taps in the linear shift-register code generator. The physical random number determines whether to pass or block the output of the EXOR gate 20b. More specifically, in the example of Fig. 5, the shift register 18 and multiple EXOR gates 20a, 20b, 20c for respectively outputting the exclusive OR of combinations of different tap outputs are provided as the linear shift-register code generator. The EXOR gate 20a outputs the exclusive OR of the 3^{rd} and 17^{th} tap outputs (Q3, Q17) as counted from the input side of the shift register 18, and the EXOR gate 20b outputs the exclusive OR of the 1^{st} and 2^{nd} tap outputs (Q1, Q2) as counted from the input side of the shift register 18. The output of the EXOR gate 20a is directly input by the EXOR gate 20c, whereas the output of the EXOR gate 20b is input by the EXOR gate 20c via the AND gate (switching section) 46. The AND gate 46 inputs the physical random number output from the physical random number generation section 14.

In this configuration, when the physical random number output value is "1", the output value of the AND gate 46 becomes the same as the output value of the EXOR gate 20b so that the exclusive OR of the output value of the EXOR gate 20a and the output value of the EXOR gate 20b is output from the EXOR gate 20c as a feedback input value to the shift register 18. On the other hand, when the physical random number output value is "0", the output value of the AND gate 46 is always "0" so that the output value from the EXOR gate 20c becomes the same as the output value of the EXOR gate 20a. In other words, when the physical random number output value is "0", the feedback input value based on the tap outputs (Q3, Q17) becomes valid so that the M sequence 3-1 (Fig. 6a) is generated in the pseudo random number generation section 42, and conversely, when the physical random number output value is "1", the feedback input value based on the tap outputs (Q1, Q2, Q3, Q17) becomes valid so that M sequence 3-2 (Fig. 6b) is generated. In this manner, the random number generation device 40 relating to this embodiment can also switch and output two random number sequences (M sequences 3-1, 3-2) according to the physical random number.

### Embodiment 4

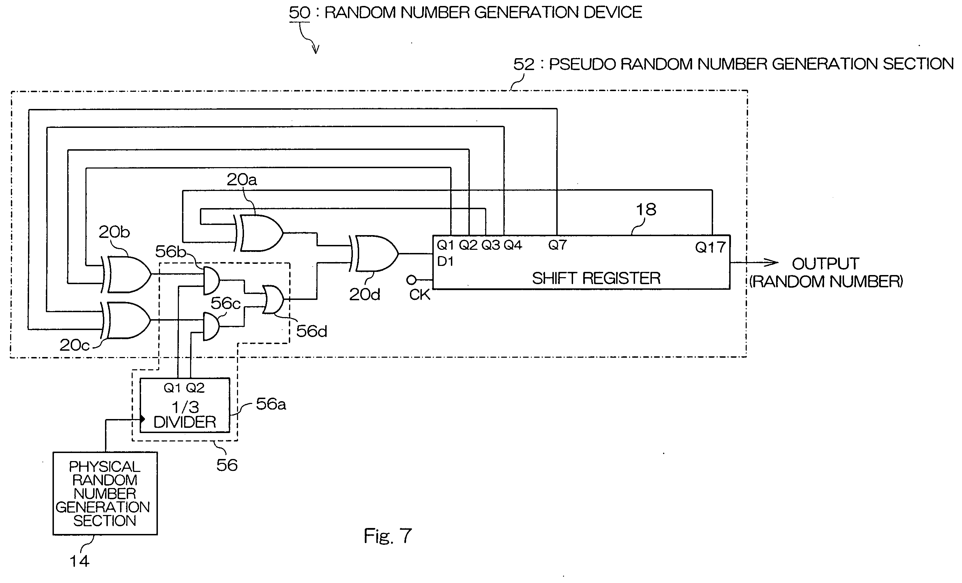

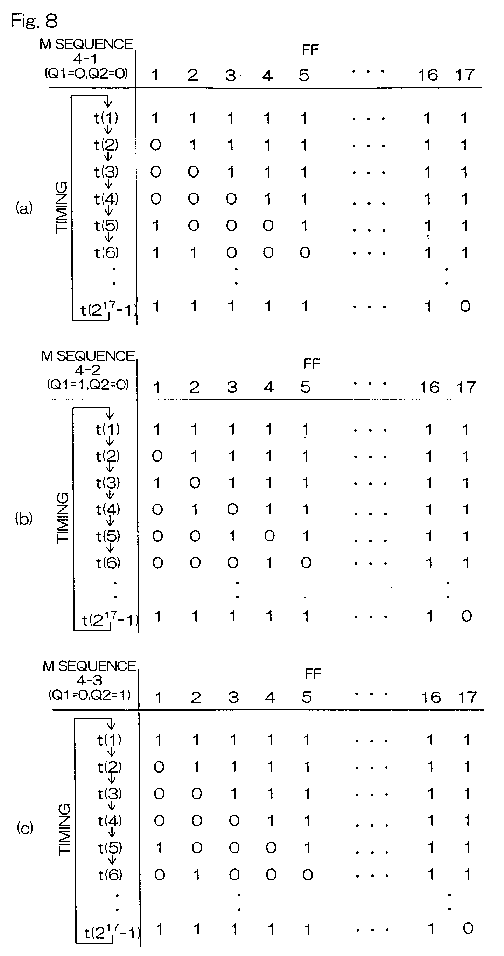

Fig. 7 is a block diagram of a random number generation device 50 relating to this embodiment and Fig. 8 shows cyclic patterns of three M sequences generated by the random number generation device 50. The random number generation device 50 comprises a pseudo random number generation section 52, the physical random number generation section 14, and a switching section 56. It should be noted here that the components that are identical to those in the above-mentioned embodiments are given the same reference numerals and their redundant descriptions are omitted.

The pseudo random number generation section 52 relating to this embodiment can generate three types of feedback input values based on different combinations of taps in the linear shift-register code generator. The physical random number determines which one of the three types of feedback input values is to be set as valid. More specifically, in the example of Fig. 7, the shift register 18 and multiple EXOR gates 20a, 20b, 20c, 20d for outputting the exclusive OR of input values based on combinations of different tap outputs are provided as the linear shift-register code generator. The EXOR gate 20a outputs the exclusive OR of the 3^{rd} and 17^{th} tap outputs (Q3, Q17) as counted from the input side of the shift register 18, the EXOR gate 20b outputs the exclusive OR of the 1^{st} and 2^{nd} tap outputs (Q1, Q2) as counted from the input side of the shift register 18, and the EXOR gate 20c outputs the exclusive OR of the 4^{th} and 7^{th} tap outputs (Q4, Q7) as counted from the input side of the shift register 18. The output of the EXOR gate 20a is directly input by the EXOR gate 20d, whereas the outputs of the EXOR gate 20b, 20c are input by the EXOR gate 20d via respective AND gates 56b, 56c, and an OR gate 56d. The AND gates 56b, 56c input the outputs from a 1/3 divider 56a.

In this embodiment, the 1/3 divider 56a, the AND gates 56b, 56c, and the OR gate 56d function as the switching section 56. In this configuration, the 1/3 divider 56a, having a publicly known configuration, cyclically updates the output values Q1 and Q2 in three patterns, where the output values Q1 and Q2 are "0" and "0" for pattern 1, "1" and "0" for pattern 2, and "0" and "1" for pattern 3. For pattern 1, namely, when the Q1 output value is "0" and the Q2 output value is "0", the output value of the OR gate 56d becomes "0", in which case, the output value of the EXOR gate 20a is input by the shift register 18 as the feedback input value. Similarly, for pattern 2, namely, when the Q1 output value is "1" and the Q2 output value is "0", the output value of the OR gate 56d becomes the same as the output value of the EXOR gate 20b. Therefore, in this case, the exclusive OR of the output value of the EXOR gate 20a and the output value of the EXOR gate 20b is output from the EXOR gate 20d as the feedback input value to the shift register 18. For pattern 3, namely, when the Q1 output value is "0" and the Q2 output value is "1", the output value of the OR gate 56d becomes the same value as the output of the EXOR gate 20c. Therefore, in this case, the exclusive OR of the output value of the EXOR gate 20a and the output value of the EXOR gate 20c is output from the EXOR gate 20d as the feedback input value to the shift register 18. Thus, whenever the physical random number output is updated, at the pseudo random number generation section 52 are generated: [1] an M sequence 4-1 (Fig. 8a) where the feedback input value, based on the tap outputs of Q3 and Q17 that are input by the EXOR gate 20a, is valid; [2] an M sequence 4-2 (Fig. 8b) where the feedback input value, based on the tap outputs of Q1, Q2, Q3, and Q17 that are input by EXOR gates 20a, 20b, is valid; and [3] an M sequence 4-3 (Fig. 8c) where the feedback input value, based on the tap outputs of Q3, Q4, Q7, and Q17 that are input by EXOR gates 20a, 20c, is valid. In this manner, the random number generation device 50 relating to this embodiment can switch and output the three random number sequences (M sequences 4-1, 4-2, 4-3) according to the physical random number.

### Embodiment 5

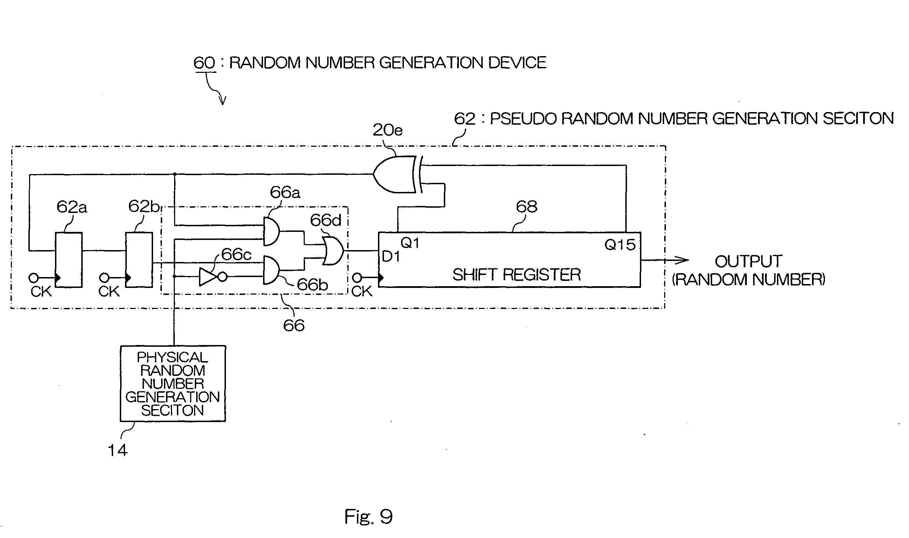

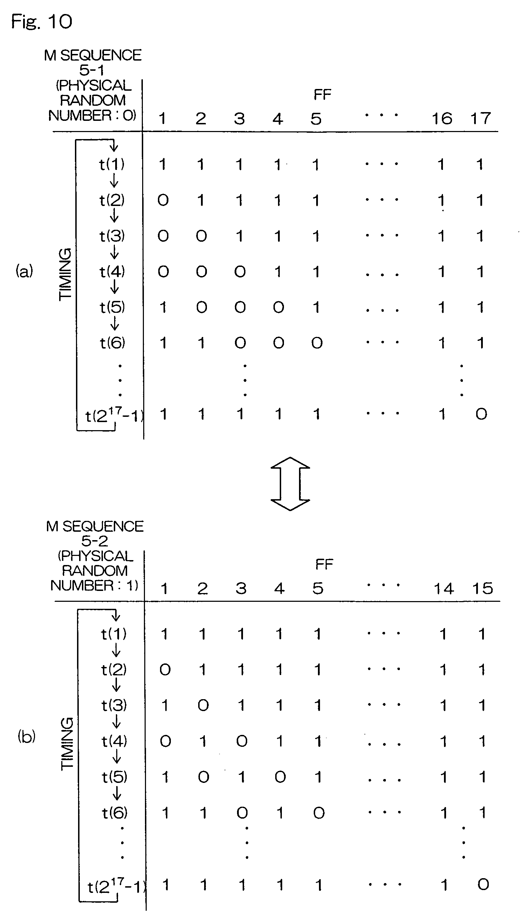

Fig. 9 is a block diagram of a random number generation device 60 relating to this embodiment and Fig. 10 shows cyclic patterns of two M sequences generated by the random number generation device 60. The random number generation device 60 comprises a pseudo random number generation section 62, the physical random number generation section 14, and a switching section 66. It should be noted here also that the components that are identical to those in the above-mentioned embodiments are given the same reference numerals and their redundant descriptions are omitted.

The pseudo random number generation section 62 relating to this embodiment uses the same taps (from which the feedback input originates) for the feedback input and is configured so as to change the number of bits in the shift register, where the change in the number of bits in the shift register is determined by the physical random number. More specifically, in the example of Fig. 9, a 15-stage shift register 68, two flip-flops 62a, 62b disposed in a cascaded arrangement, and an EXOR gate 20e for outputting the exclusive OR of a combination of predetermined tap outputs are provided as the linear shift-register code generator. The EXOR gate 20e outputs the exclusive OR of the 1^{st} and 15^{th} tap outputs (Q1, Q15) as counted from the input side of the shift register 68. The output of the EXOR gate 20e is input by the flip-flop 62a at the front stage side and an AND gate 66a.

The switching section 66 comprises two AND gates 66a, 66b. The AND gate 66a inputs the output of the EXOR gate 20e and the physical random number output from the physical random number generation section 14, and the AND gate 66b inputs a Q output and the physical random number output from the physical random number generation section 14 via an inverter 66c. The outputs of these two AND gates 66a, 66b are input by an OR gate 66d, and the output of the OR gate 66d is input by the shift register 68.

The switching section 66 sets as valid one of either the output of the EXOR gate 20e or the output of the flip-flop 62b. Namely, when the physical random number output value is "0", the output value of the AND gate 66a is always "0" and the output value of the AND gate 66b becomes the same as the output value of the flip-flop 62b so that the output value of the OR gate 66d becomes the same as the output value of the flip-flop 62b. Conversely, when the physical random number output value is "1", the output value of the AND gate 66b is always "0" and the output value of the AND gate 66a becomes the same as the output value of the EXOR gate 20e so that the output value of the OR gate 66d becomes the same as the output value of the EXOR gate 20e. Namely, due to the action of the switching section 66, when the physical random number output value is "0", the flip-flops 62a, 62b also function as part of the shift register. The 17-stage shift register including these flip-flops generates an M sequence 5-1 (Fig. 10a) where the feedback input value based on the tap outputs (Q3, Q17) is set as valid. On the other hand, when the physical random number output value is "1", the flip-flops 62a, 62b become disabled so that the 15-stage shift register 68 generates an M sequence 5-2 (Fig. 10b) where the feedback input value based on the tap outputs (Q1, Q15) is set as valid. In this manner, the random number generation device 60 relating to this embodiment can switch and output random number sequences (M sequence 5-1, 5-2) generated by the two shift registers having a different number of stages according to the physical random number.

### Embodiment 6

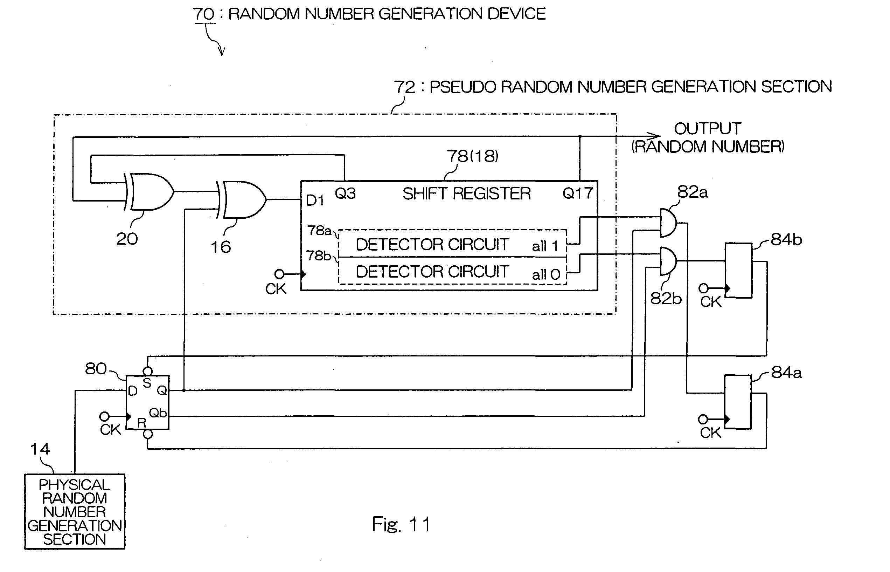

Fig. 11 is a block diagram showing a random number generation device 70 relating to this embodiment. The random number generation device 70 comprises a pseudo random number generation section 72, the physical random number generation section 14, and the switching section 16. The pseudo random number generation section 72 of this embodiment is identical to the pseudo random number generation section 12 of embodiment 1, except that a detector circuit 78a (described hereinafter) is provided within a shift register 78 (18), and can generate the M sequences 1-1 and 1-2 shown in Fig. 2. It should be noted here also that the components that are identical to those in the above-mentioned embodiments are given the same reference numerals and their redundant descriptions are omitted.

The linear shift-register code generator cannot generate M sequence codes depending on the code sequence within the shift register. For example, the M sequence 1-1 cannot be generated if all bit values of the shift register are "0" and the M sequence 1-2 cannot be generated if all bits of the shift register are "1". A conventional general linear shift-register code generator that generates only codes of one pseudo random number sequence was sufficient if care was taken in the initial value to avoid such a code sequence. However, in the above-mentioned embodiments, where the generated pseudo random number sequence is changed during operation, it is preferable to design a countermeasure so that such a code sequence does not occur within the shift register with respect to a valid pseudo random number sequence. Thus, the random number generation device 70 relating to this embodiment also comprises, in addition to the random number generation device 10 relating to embodiment 1, detector circuits 78a, 78b, AND gates 82a, 82b, flip-flops 84a, 84b, and a flip-flop 80.

The above-mentioned additional components will be described. The output (physical random number output) from the physical random number generation section 14 is input by the flip-flop 80. This embodiment also provides that the physical random number output value "0" indicates the M sequence 1-1 (Fig. 2a) and "1" indicates the M sequence 1-2 (Fig. 2b). When all bit values of the shift register 78 are "1", the detector circuit 78a outputs "1" (for example, outputs the AND of all bit values) to the AND gate 82a. Furthermore, when all bit values of the shift register 78 are "0", the detector circuit 78b outputs "1" to the AND gate 82b (for example, outputs the AND of the inverted values of all bits). The AND gate 82a inputs the output of the detector circuit 78a and the Q output of the flip-flop 80, and the output of the AND gate 82a is input by the flip-flop 84a. The AND gate 82b inputs the output of the detector circuit 78b and the Qb output of the flip-flop 80, and the output of the AND gate 82b is input by the flip-flop 84b. Then, the flip-flop 80 inputs the output of the flip-flop 84a as a reset signal (R input) and the output of the flip-flop 84b as a set signal (S input). It should be noted that although the detector circuits 78a, 78b are built into the shift register 78 in the example of Fig. 11, they may be connected externally to the shift register 78.

In the above-mentioned configuration, when the physical random number output value changes from "0" to "1" while all bit values of the shift register 78 are "1", the value of the flip-flop 80 becomes "1" and the Q output value becomes "1". Furthermore, since the output value of the detector circuit 78a is "1", the output value of the AND gate 82a becomes "1". Then, the value of the flip-flop 84a becomes "1" so that the reset signal is input by the flip-flop 80. Therefore, in this case, the value of the flip-flop 80 changes from "1" to "0". Namely, in the above-mentioned configuration, it is possible to prevent the state (that is, all bit values "0") where the codes of M sequence 1-1 (Fig. 2a) are not generated in the shift register 78.

On the other hand, when the physical random number output value changes from "1" to "0" while all bit values of the shift register 78 are "0", the value of the flip-flop 80 becomes "0" and the Qb output value becomes "1". Furthermore, since the output value of the detector circuit 78b is "1", the output value of the AND gate 82b becomes "1". The value of the flip-flop 84b then becomes "1" so that the set signal is input by the flip-flop 80. Therefore, in this case, the value of the flip-flop 80 changes from "0" to "1". Namely, in the above-mentioned configuration, it is possible to prevent the state (that is, all bit values "1") where the codes of M sequence 1-2 (Fig. 2b) are not generated in the shift register 78.

The same effect is achieved if the value of at least one bit of the shift register 78 is changed by the outputs of the flip-flops 84a, 84b. For example, if the output of the flip-flop 84a is used as the reset signal for at least one internal flip-flop forming the shift register 78, the value of that flip-flop (bit) becomes "0" so that it is possible to prevent the state where the codes for the M sequence 1-1 are not generated. Furthermore, if the output of the flip-flop 84b is used as the reset signal for any internal flip-flop forming the shift register 78, the value of that flip-flop (bit) becomes "1" so that it is possible to prevent the state where the codes for the M sequence 1-2 are not generated.

Although the preferred embodiments of the present invention were described hereinbefore, the present invention is not intended to be limited to the configurations shown in the above-mentioned embodiments and can be reduced to practice also by the use of various equivalent circuits. Although pseudo random numbers in the above-mentioned embodiments were illustrated as several types of M sequence codes generated by the linear shift-register code generator including the 17-stage or 15-stage shift register, they are not limited to this and may be M sequences based on a shift register having a different number of stages or combination of taps. Furthermore, although the above-mentioned embodiment 6 was illustrated on the basis of the above-mentioned embodiment 1 by way of example, it is also similarly applicable to another embodiment. Furthermore, although the above-mentioned embodiments 1 and 3-6 used the output from the flip-flop at the final stage of the shift register as the random number output, the output from another flip-flop may be used as the random number output or the feedback value that is input by the shift register may be used as the random number output.

### Industrial Applicability

As described hereinbefore, according to the present invention, random numbers having a higher degree of safety can be generated, such as in an application to an encryption algorithm where the prediction of random numbers is difficult, since one of a plurality of pseudo random number sequences is set as valid as a result of the physical random number based switching. Thus, the present invention is suited for use in applications, such as encryption technology, where a higher degree of safety is required.

## Claims

1. A random number generation device comprising:
pseudo random number generating means capable of outputting random number patterns of a plurality of different pseudo random number sequences;
physical random number generating means for generating physical random numbers; and
switching means for switching pseudo random number sequences of random numbers that are output by said pseudo random number generating means on the basis of physical random numbers generated by said physical random number generating means.

2. A random number generation device according to claim 1, wherein:
said pseudo random number generating means having a linear shift-register code generator;
said switching means for switching between inverted and non-inverted feedback input values to said linear shift-register code generator on the basis of a physical random number generated by said physical random number generating means.

3. A random number generation device according to claim 1, wherein:
said pseudo random number generating means having a linear shift-register code generator;
said switching means for switching between inverted and non-inverted output values from said linear shift-register code generator on the basis of a physical random number generated by said physical random number generating means.

4. A random number generation device according to claim 1, wherein:
said pseudo random number generating means having a linear shift-register code generator and generating a plurality of feedback input values on the basis of different combinations of taps of the linear shift-register code generator;
said switching means for switching, from among said plurality of feedback input values that are generated, the feedback input values to be fed back as input to the linear shift-register code generator on the basis of a physical random number generated by said physical random number generating means.

5. A random number generation device according to claim 1, wherein:
said pseudo random number generating means having a linear shift-register code generator for generating a first feedback input value on the basis of a predetermined tap combination and a flip-flop for receiving the first feedback input value, performing bit shifting for a predetermined number of bits in synchronization with said linear shift-register code generator, and setting the output thereof as a second feedback input value;
said switching means for switching a feedback input value as feedback input to said linear shift-register code generator from among said first or second feedback input value on the basis of a physical random number generated by said physical random number generating means.

6. A random number generation device according to claim 2:
comprising detecting means for detecting a code sequence of said linear shift-register code generator;
wherein, if random numbers of a valid pseudo random number sequence cannot be generated due to said code sequence that was detected, said switching means switch to a pseudo random number sequence other than said pseudo random number sequence.

7. A random number generation device according to claim 2:
comprising detecting means for detecting a code sequence of said linear shift-register code generator;
wherein, if random numbers of a valid pseudo random number sequence cannot be generated due to said code sequence that was detected, at least one bit among bit values of said code sequence is inverted.
